# EUROPEAN PATENT SPECIFICATION

(11) **EP 3 012 472 B1**
(45) Date of publication and mention of the grant of the patent: **20.03.2019**
(21) Application number: 14189881.7
(22) Date of filing: 22.10.2014
(51) Int. Cl.: F16C 1/22, F16C 1/10, F16C 1/14, F16C 1/26

(54) **Conduit length adjustment device and relating methods**
Leitungslängenanpassungsvorrichtung und zugehöriges Verfahren
Dispositif de réglage de longueur de conduit et procédés afférents

(43) Date of publication of application: 27.04.2016
(73) Proprietor: FICO CABLES LDA, 4470-263 Vermoim-Maia (PT)
(72) Inventor: Carneiro, Marco, 4470-263 Vermoim-Maia (PT); Ferreira, Paulo, 4470-263 Vermoim-Maia (PT); Lopes, Pedro, 4470-263 Vermoim-Maia (PT)
(74) Representative: Mader, Joachim

(56) References cited:
- EP-A2- 0 475 017
- EP-A2- 1 757 829
- EP-B1- 0 983 447
- JP-A- 2006 153 257
- US-A- 5 156 064

## Description

### 1. Technical Field

The present invention relates to a device and method for adjusting and re-adjusting the length of a Bowden cable. In particular, it relates to a conduit length adjustment device of a Bowden cable in particular for the automotive industry that cannot be locked and unlocked accidentally.

### 2. Prior Art

In the automotive industry, e.g. in automobiles, trucks, motorbikes, bikes, or the like so called Bowden cables are used as gear shift cable, clutch cable, brake cable, heating system cable, hood locking cable and for many other applications. Bowden cables are flexible cables comprising a bendable conduit that surrounds an inner steel cable in order to transmit a mechanical pulling or pushing force by movement of the inner cable relative to the outer conduit. This is done by displacing the inner cable in respect to the outer conduit.

The length of the conduit and/or the inner cable may have manufacturing tolerances. Thus, during the installation of a Bowden cable to the device to be actuated, such tolerances are compensated by adjusting the length of the conduit. To this end, Bowden cables usually comprise a telescopic conduit length adjustment device. The length of the conduit is adjusted by shortening and lengthening the adjustment device. Adjustment devices of the prior art comprise an inner and an outer tube-like body, wherein the inner body is slidably arranged within the outer body. During adjustment, the two bodies can move longitudinally to each other until the desired overall length of the adjustment device is achieved. Then, both slidable bodies are locked with respect to each other, preferably by a locking clip.

Commonly, such clips cannot be moved back to the unlocked position anymore. When locked, the length of the adjustment device, and therefore the length of the Bowden cable, cannot be re-adjusted anymore. Thus, when variations in length arise during the lifetime of a Bowden cable, a new Bowden cable has to be mounted.

To enable the readjustment of the length of a Bowden cable, the document EP 1 757 829 B1 proposes an adjustment device providing an adjuster body that enables locking and unlocking said adjustment device by rotating the adjuster body to a specific position. The device comprises a plurality of parts which leads to a fairly complex device structure.

The document US 5,921,143 proposes an adjustment device wherein a locking clip locks two coupling members together in a first position in which the coupling members may be moved relative to each other, and a second position in which the coupling members are immovably fixed to each other. This leads to a rather complex locking process. Furthermore, because the locking clip is a separate element that is initially not attached to the device, the locking clip must be handled separately and might get lost during transport or mounting.

Conduit length adjustment devices with locking members are also disclosed in JP 2006 153257 A, EP 0 983 447 B1, EP 0 475 017 A2 and US 5 156 064 A.
known adjustment devices, the locking clip does not provide any mechanism to prevent the corresponding device from accidentally being locked or unlocked. Therefore, an unintentionally applied force to the locking clip may accidentally lock or unlock the adjustment device.

Therefore, the underlying problem of the present invention is to provide an improved re-adjustable conduit length adjustment and improved methods for adjusting and re-adjusting the length of a Bowden cable. Further the above mentioned unintentional locking or unlocking should be prevented and at the same time the locking and unlocking procedure should be simplified.

### 3. Summary of the Invention

The above mentioned problem is solved by a conduit length adjustment device according to claim 1, a Bowden cable according to claim 11 and methods for transporting, mounting, adjusting and re-adjusting a Bowden cable according to claims 12 and 13.

According to one aspect of the invention, this problem is solved by a conduit length adjustment device according to claim 1.

By providing a female body and a male body that is arranged axially moveable within the female body along a longitudinal axis, the length of the conduit length adjustment device and an attached conduit of a Bowden cable can be adjusted. Thus, manufacturing and mounting tolerances can be compensated. The conduit length can be increased by moving the male body axially in direction out of the female body. In contrast, the conduit length can be decreased by moving the male body axially in direction into the female body. When the desired length is reached, the male and female bodies are interlocked with respect to each other in order to fix the axial length of the conduit length adjustment device. This is done by a locking clip which is rotatably mounted on the surface of the female body. By rotating the locking clip from its open position to its locked position, the locking clip comes into engagement with the male body which then gets locked at its current position with respect to the female body. In the open position, the locking clip does not engage with the male body.

Do to the rotatable locking clip, the transporting and the mounting process of the Bowden cable to the device to be actuated is significantly simplified. For the transporting, no particular requirements have to be taken care of since the clip cannot get lost because it is non-releasably arranged on the surface of the female body. During mounting, a worker usually has to take care of not accidentally locking the device until the Bowden cable is correctly fixed to the device to be actuated and desired length has been adjusted. By using a rotatable locking clip, the worker can put his complete attention to the correct mounting and length adjustment, without taking care of not accidentally locking the device. This significantly improves the mounting quality, which requires exactly adjusted Bowden cables.

Furthermore, the above described rotatable arrangement of the locking clip prevents the conduit length adjustment device from being accidentally locked during transport. Often, a plurality of such devices is densely packed in one common packaging. During transport, e.g. during loading or unloading, a force may accidentally be applied to the packaging and therefore also to the devices, which in the prior art caused the non-intended locking of some of the devices. When accidentally locked during transport such devices are usually not usable anymore. A rotatable locking clip securely prevents an accidental locking of the devices during transport.

Preferably, the locking clip comprises a snap-latch preventing the locking clip from accidentally moving back from the locked position to the open position. The snap-latch counteracts an unintentional rotative force that is applied to the locked locking clip and increases the safety of the conduit length adjustment device. An accidental unlocking of the device has to be excluded since it is often used in safety-critical devices, like brake systems etc..

Preferably, the snap-latch has a locking lug which engages in the locked position a locking socket arranged on the outside of the female body. A locking lug engaging a locking socket provides a very reliable locking that withstands high forces.

Preferably the male body comprises a row of first tooth-like barriers on at least a part of its surface and wherein the locking clip comprises second tooth-like barriers, which come into engagement with the first tooth-like barriers when the locking clip is rotated from the open position to the locked position. When rotating the locking clip to its locked position, the second tooth-like barriers of the locking clip interlock with the first tooth-like barriers of the male body and thereby form fit lock the female body and the male body with respect to each other.

Preferably, the locking clip and the female body form at least one blocking mechanism which prevents the locking clip from being accidentally rotated from the open position to the locked position. On the one hand, an unintended locking, e.g. during transport, is prevented which relieves the burden from a worker of having to reopen an unintentionally locked device before the length of the device could be adjusted, and therefore improves efficiency of mounting, adjusting and/or re-adjusting the conduit length adjustment device, or the attached Bowden cable respectively. On the other hand, such mechanism prevents the conduit length adjustment device from being accidentally locked during the process of mounting, adjusting and/or re-adjusting the device.

Preferably, the blocking mechanism comprises at least one wave-shaped contour on the inner side of the locking clip that cooperates with at least one wave crest on the outer side of the female body in order to hold the locking clip in the open position. The rounded wave-shape of the contour allows the application of a well-defined counter-force to a rotative force applied to the locking clip.

Preferably, the at least one wave-shaped contour comprises a first wave crest and a second wave crest located at the inner side of the locking clip, forming a first and a second wave trough, and wherein a third wave crest is located on the surface of the female body, such that the third wave crest is located within the first wave trough when the locking clip is in the open position. Preferably, when the locking clip is rotated towards the locked position, the second wave crest deforms the locking clip by locally increasing its diameter.

The wave-shaped contour enables an interlocking of wave crests and corresponding wave troughs. Preferably, the third wave crest fits into an oppositely located first wave trough that is formed by the first and second adjacent wave crests. When interlocked, the third wave crest occupies the first wave trough. Therefore, the third wave crest prevents an unintentional movement of the first and second wave crests what prevent an unintentional rotation of the locking clip with a well-defined counter-force.

The locking clip can only be moved to the locked position, when an intentional rotative force is applied to it that is higher than the counter-force. When the locking clip is in the open position, such force moves the second wave crest of the locking clip above the third wave crest, located on the female body. This movement bends a part of the locking clip away from the device. The bending reaches its maximum when the peaks of the second and third wave crest are located exactly above each other. Therefore, the diameter of the locking clip is locally increased. When the peak of the second wave crest has been moved beyond the peak of the third wave crest, the third wave crest snaps into the second wave trough of the locking clip. The second wave crest is wider than the first wave crest which allows that the locking clip can now be rotated until it reaches the locked position.

When the locking clip is rotated back to the open position, the second wave crest has to pass the third wave crest in the opposite direction. When the peak of the second wave crest passes the peak of the third wave crest, the third wave crest snaps into the wave trough formed by the first and second wave crests. Thus, the movement of the first and second wave crests, and therefore the movement of the locking clip, is prevented until another intentional rotative force is applied to the locking clip.

Preferably, the conduit length adjustment device further comprises a spring for biasing the female body and the male body away from each other in an axial direction. The spring allows an automatic adjustment of the length of the conduit length adjustment device. The spring applies a defined pre-tension to the Bowden cable to be adjusted. After assembly the worker only needs to rotate the locking clip to the locked position.

Preferably, the female body comprises a barrier opening and wherein the locking clip comprises a barrier socket that provides the second tooth-like barriers and wherein the barrier socket is slidably supported within the barrier opening in order to allow the rotation of the locking clip. Preferably, the barrier opening comprises holding frames at its inner side that interact with holding latches at the barrier socket such that the locking clip is non-releasably mounted to the female body. The barrier opening allows that the barrier socket can be rotated towards the male body. This enables the engagement between the row of first tooth-like barriers of the male body with the second tooth-like barriers of the locking clip, which are located at the inner side of the barrier socket.

The holding frames are preferably located coaxially at the border of the barrier opening such that a gap is formed between the holding frames at each of the two borders. Preferably the holding frames are coaxially curved. The sides of the holding frames that point towards the gaps are chamfered such that the gaps are tapered towards the inner side of the female body. This allows a simplified assembly of the female body and the locking clip. The holding latches of the locking clip are pushed through the gaps. Due to the tapered gap, the holding latches prevent that the locking clip can be removed again from the female body.

Preferably, the female body and the male body comprise axial bores for receiving an inner cable of a Bowden cable, wherein the axial bores are flared to the inside of the conduit length adjustment device. The flared bores simplify the introduction of an inner cable of a Bowden cable through the conduit length adjustment device. Since both axial bores are flared to the inside of the conduit length adjustment device, the inner cable can be inserted easily from either side.

One embodiment of the present invention relates to a Bowden cable comprising a conduit length adjustment device as specified above, the Bowden cable further comprising a first conduit connected to the female body, a second conduit connected to the male body, an inner cable extended slidably through the conduits and through the conduit length adjustment device, wherein the inner cable comprises end fittings and the conduits comprise conduit end fastening devices. Such a Bowden cable is significantly improved compared to common Bowden cables known from the prior art as it provides all the above described advantages, like a simplified mounting process, the prevention of being locked or unlocked accidentally, and a more secured transporting without the risk of getting locked accidentally.

Yet another aspect of the present invention relates to a method for transporting and mounting a Bowden cable, according to claim 12.

The method prevents a conduit length adjustment device to be accidentally locked by counteracting an unintentionally applied rotative force directed towards the locking clip. Thus the method simplifies transporting and mounting a Bowden cable.

Yet another aspect of the present invention relates to a method for mounting, adjusting and re-adjusting a Bowden cable, according to claim 13.

The method simplifies mounting, adjusting, and re-adjusting a Bowden cable. The method enables the length adjustment of a Bowden cable comprising a conduit length adjustment device and locking said device by applying an intentional rotative force to the locking clip. In addition, the method enables an intentional opening of the device for re-adjusting the length of the conduit length adjustment device. Furthermore, the method prevents the conduit length adjustment device from being accidentally opened.

Further preferred embodiments of the invention are described in the dependent claims.

### 4. Short Description of the Drawings

In the following, preferred embodiments of the present invention are explained in detail in respect to the figures. In which shows:
- Fig. 1:: a three dimensional view of preferred embodiment of a conduit length adjustment device mounted to a preferred embodiment of a Bowden cable;
- Fig. 2:: a side view of a conduit length adjustment device of a preferred embodiment of the invention;
- Fig. 3:: a longitudinal cross-section side view of the conduit length adjustment device of Fig. 2;
- Fig. 4:: a three dimensional exploded view of a conduit length adjustment device of Fig. 2;
- Fig. 5A-B:: an axial back-side and axial front-side view of a conduit length adjustment device of Fig. 2;
- Fig. 6:: a side-view of the female body of a conduit length adjustment device of Fig. 2;
- Fig. 7:: a side-view of the female body of a conduit length adjustment device of Fig. 2 from the opposite side compared to Fig. 6;
- Fig. 8:: a three dimensional view of the female body of a conduit length adjustment device of Fig. 2;
- Fig. 9:: a side-view of the male body with a mounted spring of a conduit length adjustment device of Fig. 2;
- Fig. 10:: a three dimensional view of the male body with a mounted spring of a conduit length adjustment device of Fig. 2;
- Fig. 11:: an axial view of the locking clip of a conduit length adjustment device of Fig. 2;
- Fig. 12:: a coaxial side view to the inside of the locking clip of a conduit length adjustment device of Fig. 2;
- Fig. 13:: a three dimensional view of the locking clip of a conduit length adjustment device of Fig. 2;
- Fig. 14:: a three dimensional sectional view of the conduit length adjustment device of Fig. 2 wherein the sectional plane is positioned in the middle of the guide rail of the female body of Fig. 6 to Fig. 8;
- Fig. 15:: a three dimensional view of the interaction in the locked position of the locking clip of Fig. 11 to Fig. 13 and the male body of Fig. 9 and Fig. 10 of a conduit length adjustment device of Fig. 2;
- Fig. 16A-B:: schematic axial cross-section views of parts of the locking clip of Fig. 11 to Fig. 13 and parts of the female body of Fig. 6 to Fig. 8 forming the blocking mechanism of a conduit length adjustment device of Fig. 2; and
- Fig. 17:: a schematic axial cross-section view of the blocking mechanism of a locking clip of Fig. 11 to Fig. 13 of a conduit length adjustment device of Fig. 2 and parts of the female body of Fig. 6 to Fig. 8.

### 5. Detailed Description of Preferred Embodiments

In the following preferred embodiments and variations of the present invention are described in detail in respect to the figures.

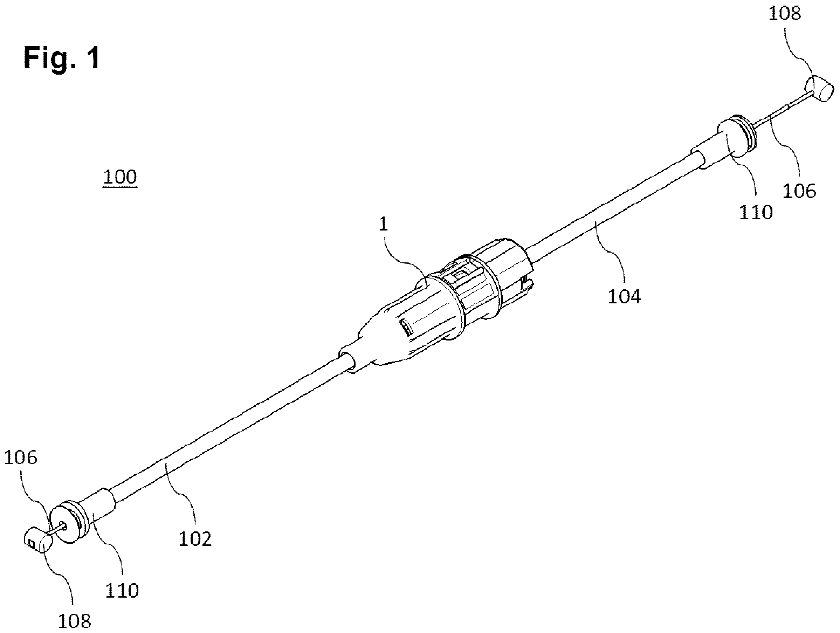

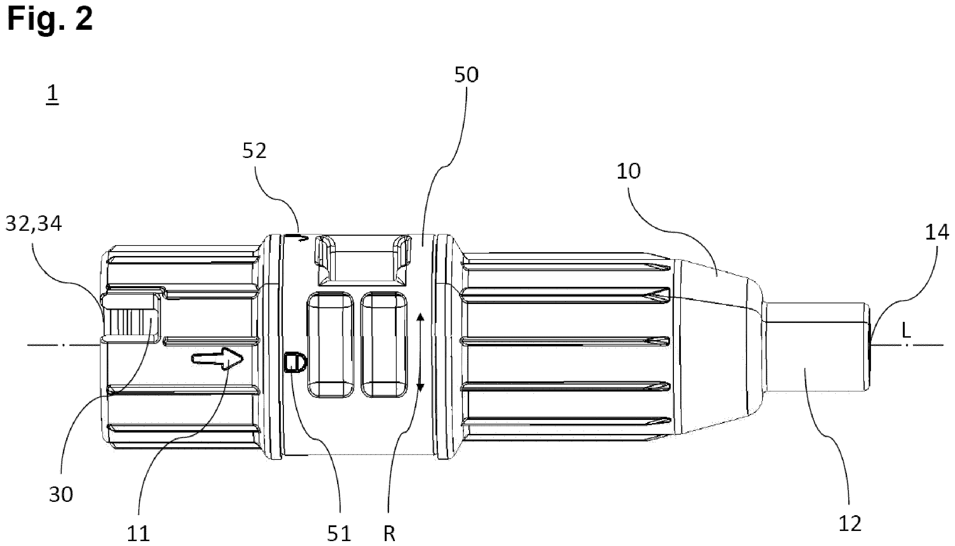

Fig. 1 shows an assembled Bowden cable 100 with a conduit length adjustment device 1 according to an embodiment of the present invention. The Bowden cable 100 comprises a first conduit 102 connected to a conduit end fitting 12 of a female body 10 and a second conduit 104 mounted at a conduit end fitting 32 of a male body 30 of the conduit length adjustment device 1 (to be seen in Fig. 2). The first and second conduits 102, 104 house an inner cable 106. An inner cable 106 is arranged slidably inside the first and second conduits 102, 104. The inner cable 106 is longer than the length of the first and second conduits 102, 104. Fastening devices 110 can be connected to an external device (not shown) to be actuated by the Bowden cable 100. The inner cable 106 preferably consists of a bendable multi filament steel cable, preferably out of stainless steel, and comprises end fittings 108 that are also attached to a device to be actuated.

The first and second conduits 102, 104 have usually a composite construction of a non-compressible but bendable helical steel wire tube which may be lined with nylon and may be covered by a plastic outer sheath. End fittings 110 of the conduits 102, 104 are provided for attaching the conduits 102, 104 to external devices (not shown).

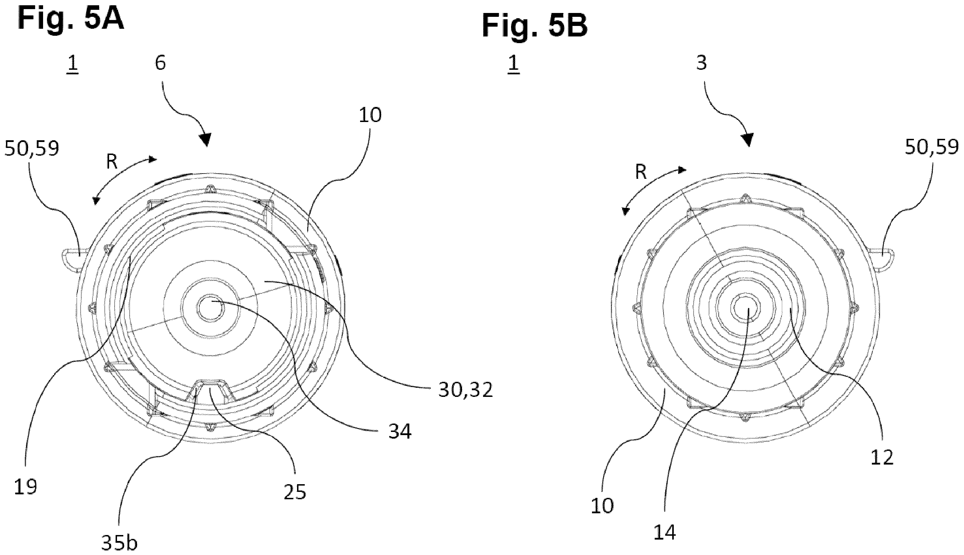

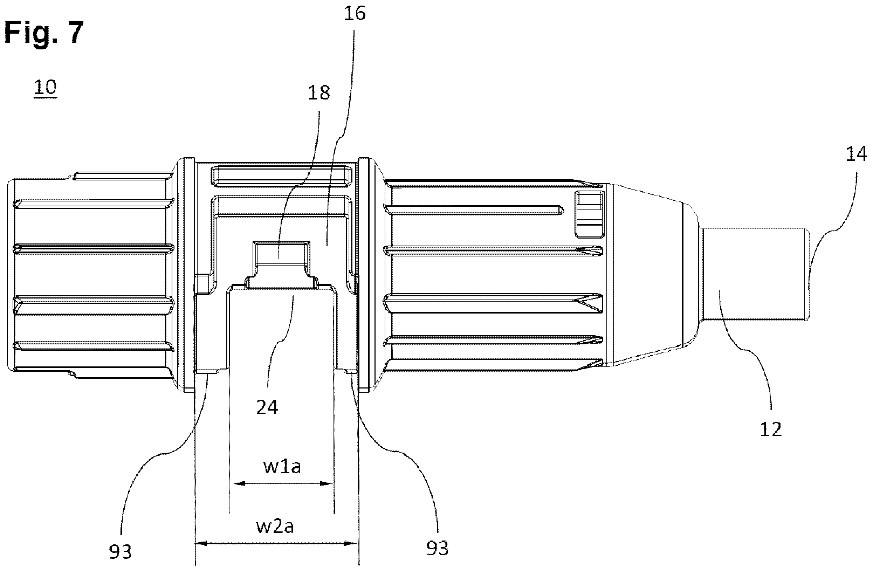

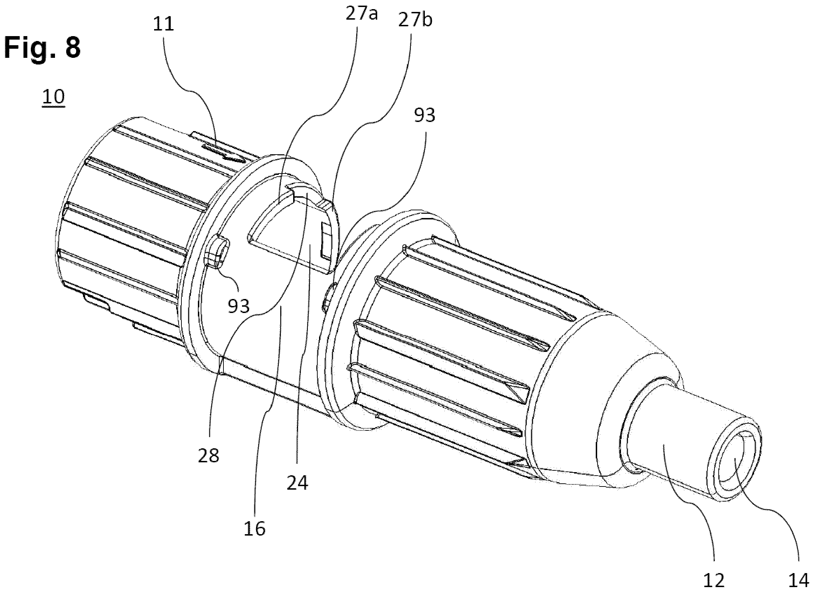

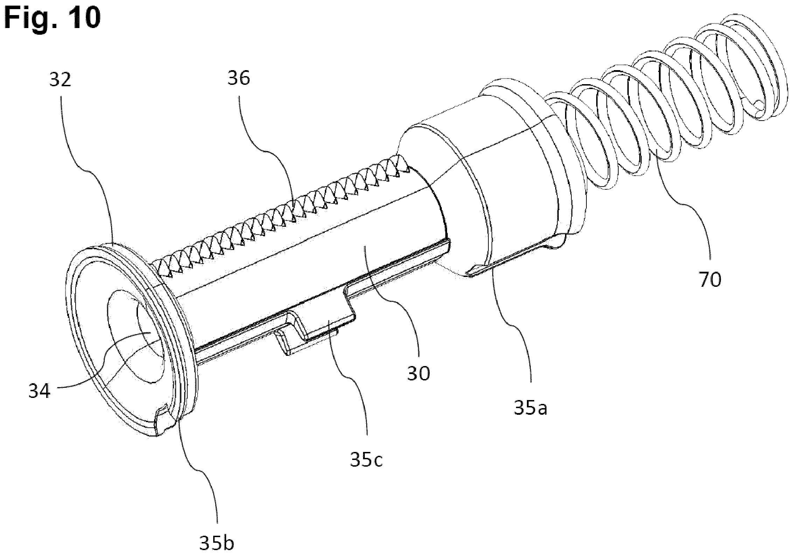

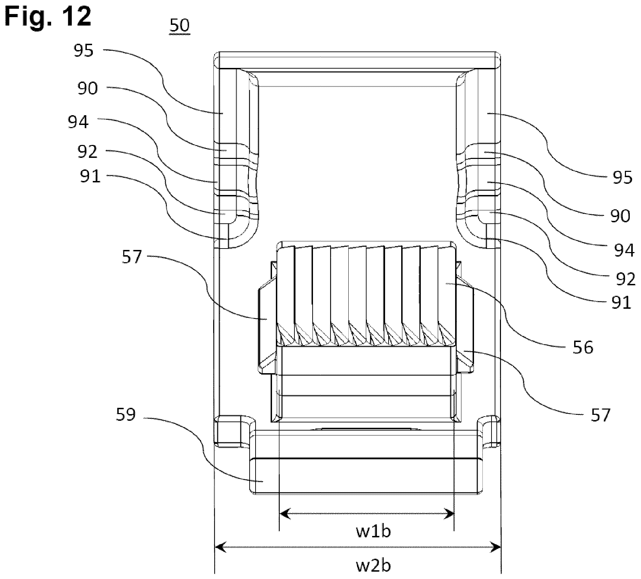

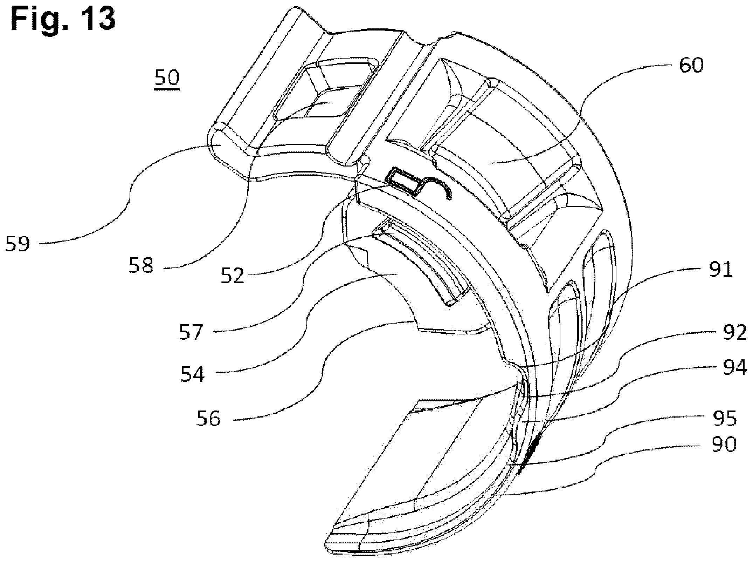

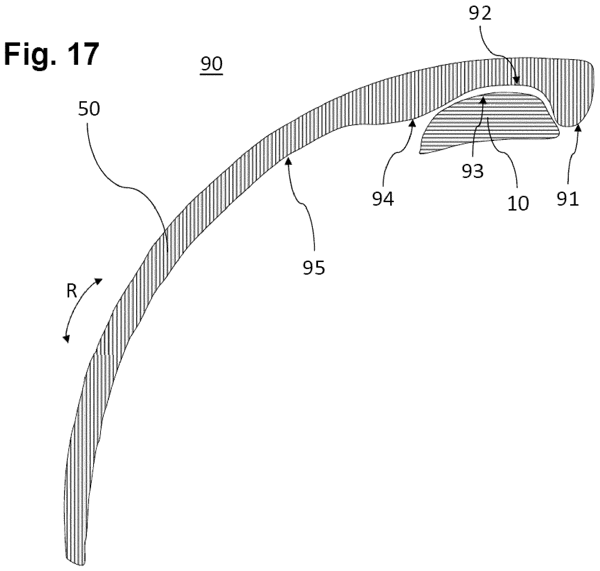

Fig. 2 to Fig. 17 show a preferred embodiment of the conduit length adjustment device 1 of the present invention and individual parts thereof, wherein Fig. 2 shows a conduit length adjustment device 1 in the locked position 96b. The conduit length adjustment device 1 has a front-side 3 and a back-side 6 (see Fig. 5A-B). It further comprises a female body 10, a male body 30, and a locking clip 50 that is arranged on the female body 10.

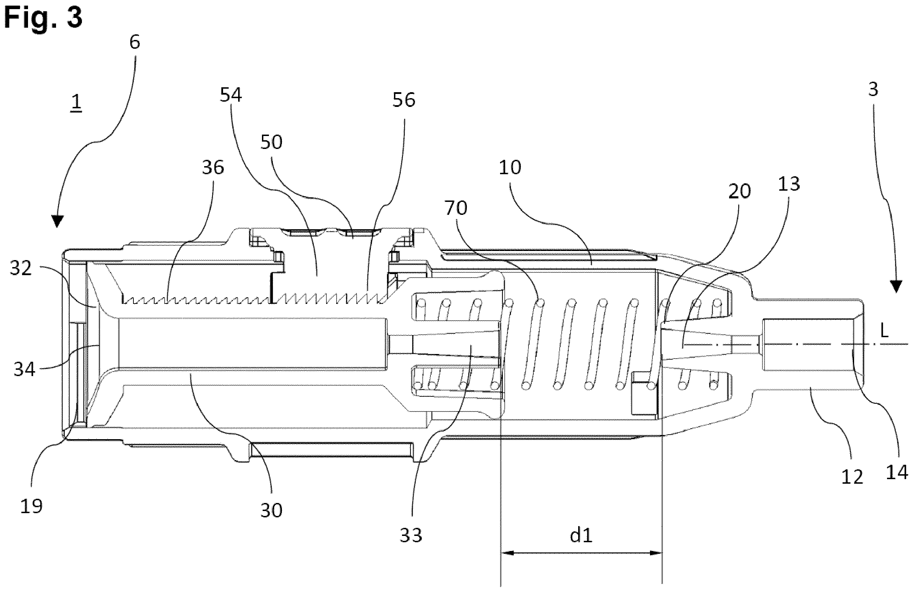

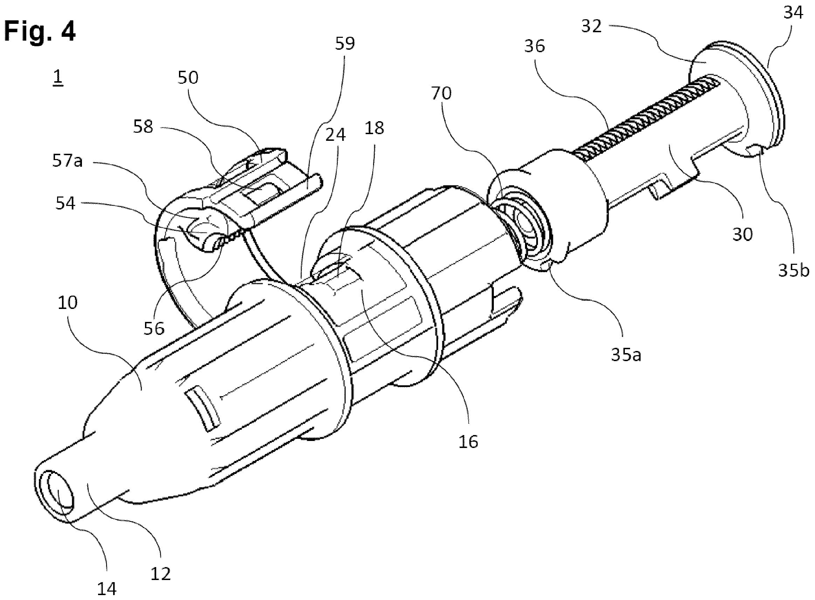

As it can be seen in Fig. 3 and Fig. 4, the conduit length adjustment device 1 further comprises a spring 70, preferably a helical spring, which urges the male body 30 axially away from the female body 10. Preferably, the female body 10 is generally hollow and has a bigger inner diameter than the male body 30 in order to accommodate the latter.

The female body 10, the male body 30 and the locking clip 50 of the conduit length adjustment device 1 are preferably made of a plastic material, like PP, PE or the like. But also other rigid materials, like any kind of metal or the like are possible as materials. One advantage of a plastic material is their low weight and non-corroding properties. Preferably, the plastic parts are respectively injection-molded in one piece.

Fig. 4 shows the conduit length adjustment device 1 in an exploded view. The single parts, namely the female body 10, the male body 30, the locking clip 50, and the spring 70 are explained in the following in more detail:

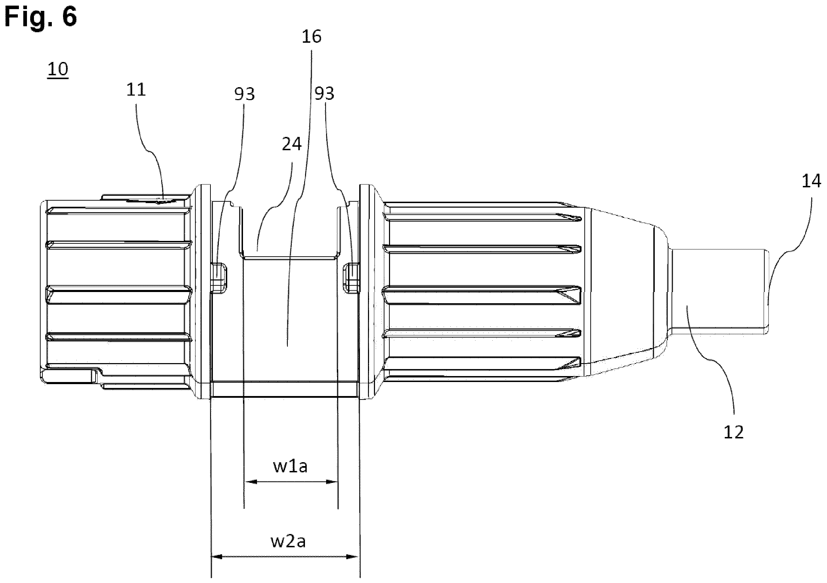

As shown in Fig. 6-8, the female body 10 comprises at one end thereof an end fitting 12 for receiving a conduit 102 of a Bowden cable 100. The end fitting 12 comprises an end fitting opening 14 through which the inner cable 106 of a Bowden cable 100 can be extended. Furthermore, the female body 10 comprises a barrier opening 24 having a width w1a and a guide channel 16 having a width w2a in which the locking clip 50 is mounted. Referring to Fig. 5A, the female body also comprises a guide rail 25 for guiding the male body 30.

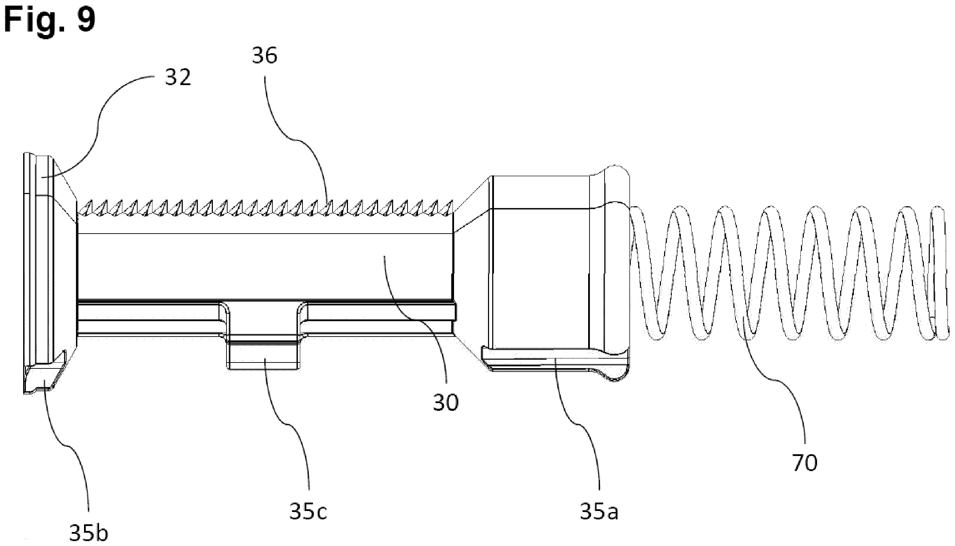

As shown in Fig.9-10, the male body 30 comprises an end fitting 32 for receiving a further conduit 104 of the Bowden cable 100. Similar to the female body 10, the male body 30 also comprises an end fitting opening 34 through which the inner cable 106 of a Bowden cable can extend. In addition, the male body 30 comprises a row of first tooth-like barriers 36 at least on parts of its surface for cooperation with the locking clip 50. The male body 30 further comprises guiding means 35a, 35b, 35c that interact with the guide rail 25 of the female body 10. Due to the guiding means 35a, 35b, 35c the male body 30 can only be inserted into the female body 10 in a specific orientation and is furthermore prevented from axially turning inside the female body 10. In a first possible embodiment of the guiding means, the guiding means include a first and a second fitting gap 35a, 35b and a pair of fitting ribs 35c located between the first and the second fitting gaps 35a, 35b. Other embodiments of the guiding means are possible as long as their configuration imposes a specific orientation of the male body 30 when inserted into the female body 10 and prevents it from axially turning inside the female body 10. For example, the pair of fitting ribs 35c may be omitted.

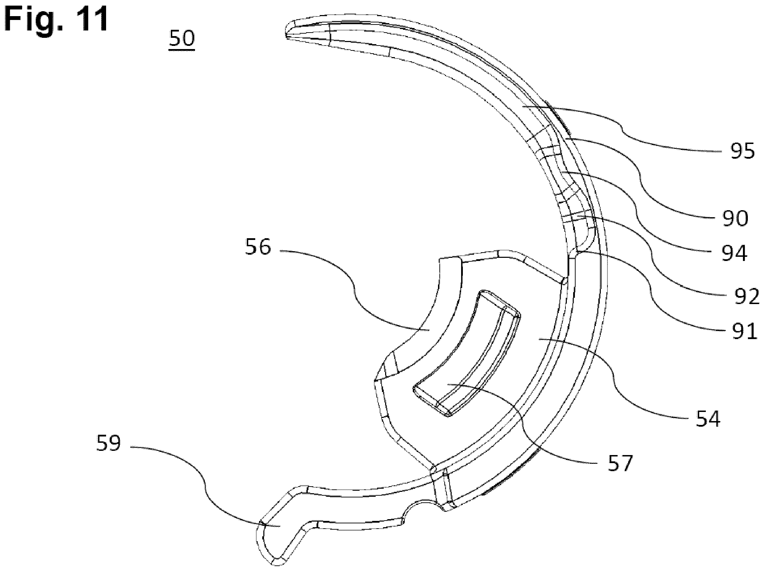

Fig. 11-13 show details of the locking clip 50. The axial width of the locking clip 50 corresponds to the width w2a. Thus, the locking clip 50 fits into the guide channel 16 of the female body 10. Preferably, the width w2a is about 10 mm to 30 mm such that an easy actuation, i.e. a rotation, of the locking clip 50 with human finger is possible. Thus, advantageously no specific tools have to be used in order to rotate the locking clip 50 from its open position 96a to its locked position 96b, or vice versa.

The locking clip 50 has an inwards directed barrier socket 54, which is preferably hollow and forms a socket cavity 60. The hollow construction leads to an advantageous weight reduction of the conduit length adjustment device, material savings and easy manufacturing by injection molding. The axial width of the barrier socket 54 is slightly smaller than the width w1a of the barrier opening 24 of the female body 10. Thus, the barrier socket 54 fits into the barrier opening 24 and the locking clip 50 is rotatably supported by the barrier opening 24 at the female body 10.

The spring 70, which is preferably mounted to one end of the male body 30, biases the male body 30 and the female body 10 away from each other in an axial direction. Therefore, the spring 70 provides a predetermined biasing force onto the Bowden cable 100 which enables an automatic length adjustment. As mentioned above, this allows for a compensation of production or installation tolerances of the Bowden cable 100 and eliminates any slack.

In the following, the functionality of the conduit length adjustment device 1 is explained in more detail: The length of the conduit length adjustment device 1 is changed or adjusted by axially moving the male body 30 along the longitudinal axis L towards the inside or outside of the female body 10. The movement is caused by the spring 70 and increases the effective length of the conduits 102, 104 of the Bowden cable 100 to eliminate any slack of the actuated system or device (not shown). To do so the male body 30 is mounted slidably in respect to the female body 10, so that the length of the conduit length adjustment device 1 can be adjusted by moving the male body 30 into or outwards of the female body 1.

Distance di, shown in Fig. 3, illustrates the adjustment range of the conduit length adjustment device 1. When the male body 30 is pushed inside the female body at most, the male body 30 abuts the front-side blocking element 20 of the female body. In the other direction the male body 30 cannot slip out of the female body 10 due to the back-side blocking element 19 of the female body 10, which latches with the end of the male body 30 during assembly of the device 1.

At the inwards directed side of the barrier socket 54, second tooth-like barriers 56 are arranged. These barriers 56 engage with the first tooth-like barriers 36 of the male body 30, when the locking clip 50 is rotated to the locked position 96b by the worker after length adjustment. This blocks the movement of the male body 30 with respect to the female body 10 and secures the effective length of the conduit length adjustment device 1 and thus the effective conduit length.

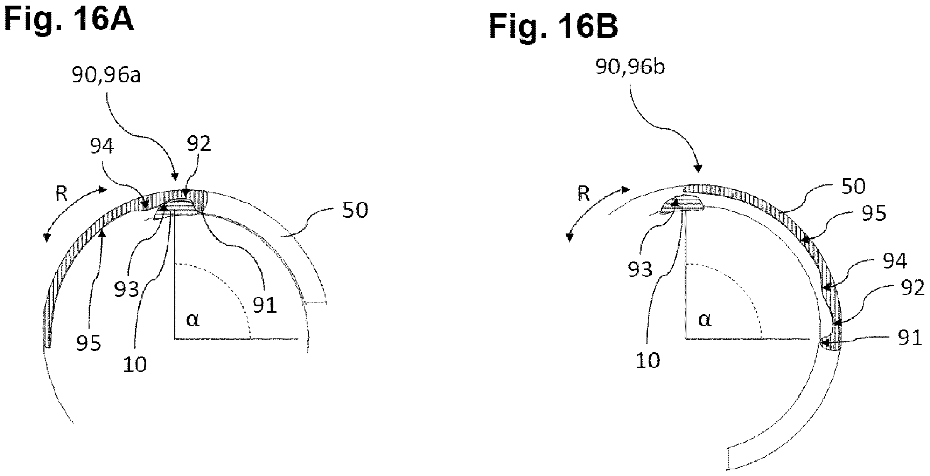

Fig. 16A shows the open position 96a and Fig. 16B the locked position 96b of the locking clip. When the desired overall length of the conduit length adjustment device 1 or the respective Bowden cable 100 is reached, the locking clip 50 is rotated by the worker from the open position 96a to its locked position 96b. Then, second tooth-like barriers 56 of the locking clip 30 and the first tooth-like barriers 36 of the male body 10, preferably forming a row, interact with each other and prevent both female and male bodies 10, 30 from further axially moving with respect to each other. Then the conduit length adjustment device 1 behaves like a rigid element and transmits pushing and/or pulling forces between the conduits 102 and 104.

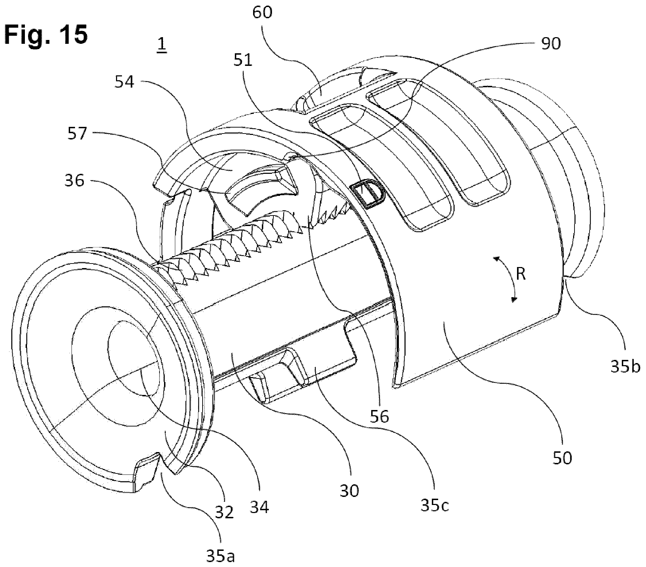

The shape of the tooth-like barriers 56 of the locking clip 50 generally corresponds to the shape of the tooth-like barriers 36 of the male body 30. As it can be seen in Fig. 15, both tooth-like barriers 36, 56 are interlocking each other in a form fitting manner when the locking clip 50 is rotated towards its locked position 96b. Both tooth-like barriers 36, 56 preferably have the shape of a triangle what increases the resistance against axial pressure.

In order to prevent an accidentally locking of the conduit length adjustment device 1, the locking clip 50 comprises a blocking mechanism 90 as shown in detail in Figs. 11 - 17. The blocking mechanism 90 has a wave-shaped contour formed by first and second wave crests 91, 94. Between the first and second wave crest 91, 94 a first wave trough 92 is formed. Furthermore, a second wave trough 95 is formed. It begins besides the second wave crest 94 and ranges up to the end of the locking clip 50. Therefore, the second wave trough 95 is essentially larger than the first wave trough 92.

In cooperation with the wave-shaped contour the female body 10 provides a third wave crest 93. When the locking clip 50 is in the open position 96a, the third wave crest 93 acts on the wave-shaped contour in the area of the first wave trough 92. For rotating the locking clip 50 the worker has to apply a well-defined high enough rotational force to the locking clip 50. Therefore, any unintentional rotative movement towards the locked position 96b is prevented. In particular, an unintentional rotative force directed towards the locking clip towards the locked position 96b is counteracted by the blocking mechanism 90. Only after applying an intentional high enough rotative force to the locking clip directed towards the locked position 96b deforms the locking clip 50 by locally increasing its diameter such that the second wave crest 94 can move over and beyond the third wave crest 93 at the female body 10.

When the peak of the second wave crest 94 passes the opposing peak of the third wave crest 93, the wave crest 93 snaps into the second wave trough 95. Since the second wave trough 95, is essentially larger than the first wave trough 92, the locking clip 50 can be rotated with a constant force until it reaches its locked position 96b. In order to reach the locked position 96b, the locking clip has to be rotated through an angle α. Preferably, the angle α is between 30 to 90°. But also other angles are possible. Basically, the angle α depends on the coaxial length of the first and second tooth-like barriers 36, 56.

The blocking mechanism 90 allows a worker to hold, assemble and install the conduit length adjustment device 1 safely without the risk of accidentally locking the conduit length adjustment device 1. When the worker unintentionally applies a rotative force to the locking clip 50, this force is counteracted by the blocking mechanism 90.

When the locking clip 50 reaches its locked position 96b, a locking lug 58 engages a locking socket 18 of a snap-latch 59. The engagement of the snap-latch 59 prevents that the locking clip 50 can be rotated accidentally back from the closed 96b to the open position 96a. Thus, an unintentionally applied rotative force to the locking clip 50 is counteracted. In order to rotate the locking clip 50 back to the open position 96a, the locking lug 58 and the locking socket 18 have to be disengaged by lifting the snap-latch 59 of the locking clip 50. After that, the locking clip 50 can be rotated back to the open position 96a. Before the fully open position 96a is reached, the second wave crest 94 has to pass the third wave crest 93 such that the worker gets a haptic feedback that the open position 96a is reached.

Thus, the snap-latch 59 allows a repeatedly intentional unlocking and locking of the conduit length adjustment device 1 for re-adjustment.

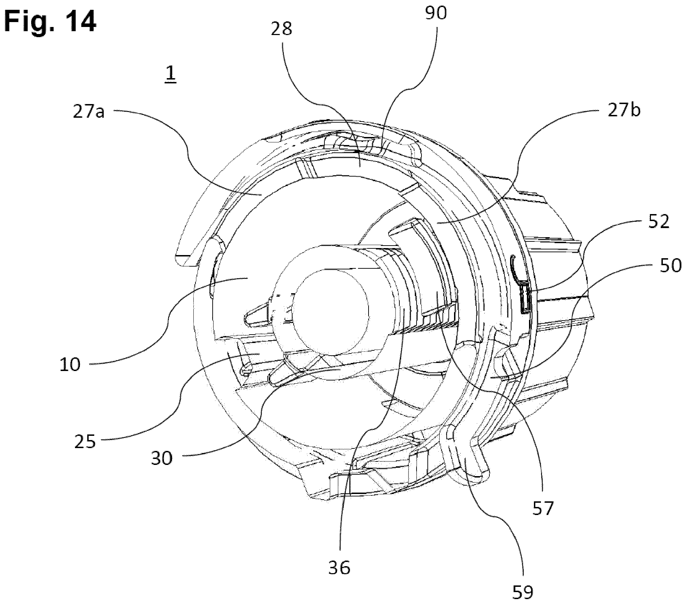

Fig. 14 shows a perspective view of the conduit length adjustment device 1 wherein the sectional plane is positioned in the middle of the guide channel 16 of the female body 10. As can be seen, the barrier opening 24 comprises holding frames 27a, 27b at its inner side that interact with a holding latch 57 at the barrier socket 54 such that the locking clip 50 is non-releasably mounted to the female body. The holding frames 27a, 27b are preferably located coaxially at the border of the barrier opening 24 such that a gap 28 is formed between the holding frames 27a, 27b at each of the two borders. The barrier socket 54 provides a holding latch 57 on each axially directed side. Preferably, the holding frames 27a, 27b are coaxially curved in order to support the rotative movement of the locking clip 50. When the locking clip 50 is rotated, the holding latch 57 slides beneath the holding frames 27a, 27b.

The sides of the holding frames 27a, 27b that point towards the gap are chamfered such that the gaps are tapered towards the inner side of the female body. This allows a simplified assembly of the female body 10 and the locking clip 50. The holding latches 57 of each side of the locking clip 50 are pushed through the gaps, located at the axial borders of the barrier opening 24. Snapping in the holding latches 57 fixes the locking clip 50 at the female body 10. In that way, the locking clip 50 is rotatively connected to and supported by the female body 10. When the locking clip 50 is rotated, it slides within the guide channel 16. The rotation of the locking clip 50 around the longitudinal axis L is indicated by arrow R.

Furthermore, the holding frames 27a, 27b counteract an outwards directed force applied by the first tooth-like barriers 36 to the second tooth-like barriers 56 when the locking clip 50 is in the locked position 96b. Such a force is caused when a pushing or pulling force is applied to the conduit length adjustment device 1.

To visually indicate whether the locking clip 50 is in the open position 96a or in the locked position 96b, the female body 10 comprises a position indication arrow 11. The position indication arrow 11 either points to a lock position symbol 51 when the locking clip 50 is in the locked position 96b or to an open position symbol 52 when the locking clip 50 is in the open position 96a. Both the lock position symbol 51 and the open position symbol 52 are provided on the locking clip 50. However, the position symbols 51, 52 could also be provided on the female body 10 and the indicator arrow 11 on the locking clip 50.

To simplify the mounting of a Bowden cable 100 to the conduit length adjustment device 1, the female body 10 and the male body 30 comprise axial bores 13, 33 for receiving an inner cable 106 of a Bowden cable 100, wherein the axial bores 13, 33 are flared to the inside of the conduit length adjustment device 1. The flared bores 13, 33 simplify the insertion of an inner cable 106 of a Bowden cable 100 into the bores 13, 33. Since both bores 13, 33 are flared, the insertion of the inner cable 106 can be done from either side of the conduit length adjustment device 1.

In a method for transporting and mounting a Bowden cable 100, the Bowden cable 100 comprising a conduit length adjustment device 1, preferably the conduit length adjustment device 1 as described above, wherein the conduit length adjustment device 1 comprises a female body 10, a male body 30, axially movably arranged within the female body 10 along a longitudinal axis L of the conduit length adjustment device 1 and a locking clip 50, wherein the locking clip 50 is rotatably arranged on the surface of the female body 10 such that the locking clip 50 is rotatable R with respect to the female body 10 around the longitudinal axis L from an open position 96a to a locked position 96b, wherein the method comprises the step of:
- counteracting an unintentional rotative force directed towards the locking clip 50 by means of the at least one blocking mechanism 90, such that the locking clip 50 is prevented from being moved on the female body 10 from the open position 96a to the locked position 96b.

An accidentally locking during transporting and/or mounting of the conduit length adjustment device is prevented by the described counteracting of an unintentionally applied rotative force directed towards the locking clip. This is achieved by a blocking mechanism 90, preferably a blocking mechanism 90 as specified above.

In a method for mounting, adjusting and readjusting a Bowden cable 100, the Bowden cable 100 comprising a conduit length adjustment device 1, preferably the conduit length adjustment device 1 as described above, wherein the conduit length adjustment device 1 comprises a female body 10, a male body 30, axially movably arranged within the female body 10 along a longitudinal axis L of the conduit length adjustment device 1 and a locking clip 50, wherein the locking clip 50 is rotatably arranged on the surface of the female body 10 such that the locking clip 50 is rotatable R with respect to the female body 10 around the longitudinal axis L from an open position 96a to a locked position 96b, the locking clip 50 having a snap-latch 59, wherein the method comprises the steps of:
- adjusting the effective length of conduits 102, 104 of the Bowden cable 100 by axially moving the male body 30 with respect to the female body 10;
- applying an intentional rotative force to the locking clip 50 in order to rotate the locking clip 50 from the open position 96a to the locked position 96b;
- when in the locked position 96b, counteracting an unintentional rotative force directed towards the locking clip 50 by means of the snap-latch 59, such that the locking clip 50 is prevented from being rotated on the female body 10 from the locked position 96b to the open position 96a; and
- re-adjusting the effective length of the conduits 102, 104 of the Bowden cable 100 by pulling the snap-latch 59 such that the locking clip 50 can be moved back from the locked position 96b to the open position 96a in order to allow an axial movement of the male body 30 with respect to the female body 10.

When the Bowden cable 100 is mounted to the external devices and the conduit length adjustment device 1 has adopted the optimal length by axially moving the male body 30 in order to remove any slack, a worker rotates the locking clip 50 by hand from the open position 96a to the locked position 96b in order to lock the conduit length adjustment device 1 to the desired length. Locking is done by applying an intentional rotative force to the locking clip 50.

To re-adjust the effective length, the snap-latch 59 has to be lifted by the worker for disengagement such that the locking clip 50 can be rotated back into its open position 96a. Thus, a further movement of the male body 30 with respect to the female body 10 for re-adjustment is possible. The snap-latch 59, however, prevents any undesired rotation in case an unintentional rotative force is applied to the locking clip 50. The described method simplifies mounting, adjusting and re-adjusting a Bowden cable 100 that comprises a conduit length adjustment device 1 as specified above.

### List of reference signs

- 1: conduit length adjustment device
- 3: front-side
- 6: back-side
- 10: female body
- 11: position indication arrow
- 12: end fitting of female body
- 13: axial bore
- 14: end fitting opening
- 16: guide channel
- 18: locking socket
- 19: back-side blocking element of female body
- 20: front-side blocking element of female body
- 24: barrier opening
- 25: guide rail
- 27a: first holding frame
- 27b: second holding frame
- 28: gap
- 30: male body
- 32: end fitting of male body
- 33: axial bore
- 34: end fitting opening
- 35a: first fitting gap
- 35b: second fitting gap
- 35c: fitting ribs
- 36: first tooth-like barriers
- 50: locking clip
- 51: lock position symbol
- 52: open position symbol
- 54: barrier socket
- 56: second tooth-like barriers
- 57: holding latch
- 58: locking lug
- 59: snap-latch
- 60: socket cavity
- 70: spring
- 90: blocking mechanism
- 91: first wave crest
- 92: first wave trough
- 93: third wave crest
- 94: second wave crest
- 95: second wave trough
- 100: Bowden cable
- 102, 104: first and second conduits
- 106: inner cable
- 108: end fitting
- 110: conduit end fastening device
- d1: maximum adjustment distance
- α: rotation angle
- w1a: width of barrier opening
- w1b: width of barrier socket
- w2a: width of the guide channel
- w2b: width of the locking clip

## Claims

1. A conduit length adjustment device (1) comprising:
a. a female body (10);
b. a male body (30), axially movably arranged within the female body (10) along a longitudinal axis (L) of the conduit length adjustment device (1); and
c. a locking clip (50); wherein
d. in an open position the locking clip (50) is not in engagement with the male body (30) in order to allow the axial movement of the male body (30) with respect to the female body (10); and
e. in a locked position (96b) the locking clip (50) engages with the male body (30) in order to prevent the axial movement of the male body (30) with respect to the female body (10); **characterised in that**
f. the locking clip (50) is mounted in a guide channel (16) of the female body (10); wherein
g. the locking clip (50) is rotatably arranged on the surface of the female body (10) such that the locking clip (50) is slidably rotatable (R) within the guide channel (16) with respect to the female body (10) around the longitudinal axis (L) from the open position (96a) to the locked position (96b);
h. the locking clip (50) comprises a snap-latch (59) having a locking lug (58) which engages in the locked position (96b) a locking socket (18) arranged on the outside of the female body (10) for preventing the locking clip (50) from accidentally rotating back from the locked position (96b) to the open position (96a);
i. wherein the snap-latch (59) can be lifted for disengagement such that the locking clip (50) can be rotated back into its open position (96a).

2. The conduit length adjustment device (1) of claim 1, wherein the male body (30) comprises a row of first tooth-like barriers (36) on at least a part of its surface and wherein the locking clip (50) comprises second tooth-like barriers (56), which come into engagement with the first tooth-like barriers (36) when the locking clip (50) is rotated from the open position (96a) to the locked position (96b).

3. The conduit length adjustment device (1) of claim 1, wherein the locking clip (50) and the female body (10) form at least one blocking mechanism (90) which prevents the locking clip (50) from being accidentally rotated from the open position (96a) to the locked position (96b).

4. The conduit length adjustment device (1) of claim 3, wherein the blocking mechanism (90) comprises at least one wave-shaped contour (91, 92, 94, 95) on the inner side of the locking clip (50) that cooperates with at least one wave crest (93) on the outer side of the female body (10) in order to hold the locking clip (50) in the open position (96a).

5. The conduit length adjustment device (1) of claim 4, wherein the at least one wave-shaped contour (91, 92, 94, 95) comprises a first wave crest (91) and a second wave crest (94) located at the inner side of the locking clip (50), forming a first and a second wave trough (92,95), and wherein a third wave crest (93) is located on the surface of the female body (10), such that the third wave crest (93) is located within the first wave trough (92) when the locking clip (50) is in the open position (96a).

6. The conduit length adjustment device (1) of claim 4 or 5, wherein when the locking clip (50) is rotated towards the locked position (96b), the wave crest (93) deforms the locking clip (50) by locally increasing its diameter.

7. The conduit length adjustment device (1) of claim 1, wherein the conduit length adjustment device (1) further comprises a spring (70) for biasing the female body (10) and the male body (30) away from each other in an axial direction.

8. The conduit length adjustment device (1) of claim 2, wherein the female body comprises a barrier opening (24) and wherein the locking clip (50) comprises a barrier socket (54) that provides the second tooth-like barriers (56) and wherein the barrier socket (54) is slidably supported within the barrier opening (24) in order to allow the rotation of the locking clip (50).

9. The conduit length adjustment device (1) of claim 8, wherein the barrier opening (24) comprises holding frames (27a, 27b) at its inner side that interact with holding latches (57a, 57b) at the barrier socket (54) such that the locking clip (50) is non-releasably mounted to the female body (10).

10. The conduit length adjustment device (1) of claim 1, wherein the female body (10) and the male body (30) comprise axial bores (13, 33) for receiving an inner cable (106) of a Bowden cable (100), wherein the axial bores (13, 33) are flared to the inside of the conduit length adjustment device (1).

11. A Bowden cable (100) comprising a conduit length adjustment device (1) of one of the claims 1 to 10, the Bowden cable (100) further comprising:
a. a first conduit (102) connected to the female body (10);
b. a second conduit (104) connected to the male body (30);
c. an inner cable (106) extended slidably through the conduits (102, 104) and through the conduit length adjustment device (1); wherein
d. the inner cable (106) comprises end fittings (108); and
e. the conduits (102, 104) comprise conduit end fastening devices (110).

12. Method for transporting and mounting a Bowden cable (100), the Bowden cable (100) comprising a conduit length adjustment device (1), preferably a conduit length adjustment device (1) according to one of the claims 1 - 10, wherein the conduit length adjustment device (1) comprises a female body (10), a male body (30), axially movably arranged within the female body (10) along a longitudinal axis (L) of the conduit length adjustment device (1) and a locking clip (50) ;
wherein in an open position the locking clip (50) is not in engagement with the male body (30) in order to allow the axial movement of the male body (30) with respect to the female body (10); and
wherein in a locked position (96b) the locking clip (50) engages with the male body (30) in order to prevent the axial movement of the male body (30) with respect to the female body (10); **characterised in that**
the locking clip (50) is mounted in a guide channel (16) of the female body (10); wherein the locking clip (50) is rotatably arranged on the surface of the female body (10) such that the locking clip (50) is slidably rotatable (R) within the guide channel (16) with respect to the female body (10) around the longitudinal axis (L) from the open position (96a) to the locked position (96b); wherein the method comprises the step of:
counteracting an unintentional rotative force directed towards the locking clip (50)
by means of at least one blocking mechanism (90) formed by the locking clip (50) and the female body (10), such that the locking clip (50) is
prevented from being moved on the female body (10) from the open position (96a) to the locked position (96b).

13. Method for mounting, adjusting and readjusting a Bowden cable (100), the Bowden cable (100) comprising a conduit length adjustment device (1), preferably a conduit length adjustment device (1) according to one of the claims 1 - 10, wherein the conduit length adjustment device (1) comprises a female body (10), a male body (30), axially movably arranged within the female body (10) along a longitudinal axis (L) of the conduit length adjustment device (1) and a locking clip (50) ;
wherein in an open position the locking clip (50) is not in engagement with the male body (30) in order to allow the axial movement of the male body (30) with respect to the female body (10); and
wherein in a locked position (96b) the locking clip (50) engages with the male body (30) in order to prevent the axial movement of the male body (30) with respect to the female body (10); **characterised in that**
the locking clip (50) is mounted in a guide channel (16) of the female body (10); wherein the locking clip (50) is rotatably arranged on the surface of the female body (10) such that the locking clip (50) is slidably rotatable (R) within the guide channel (16) with respect to the female body (10) around the longitudinal axis (L) from the open position (96a) to the locked position (96b), the locking clip (50) having snap-latch (59) comprising a locking lug (58) which engages in the locked position (96b) a locking socket (18) arranged on the outside of the female body (10) for preventing the locking clip (50) from accidentally moving back from the locked position (96b) to the open position (96a), wherein the method comprises the steps of:
- adjusting the effective length of conduits (102, 104) of the Bowden cable (100) by axially moving the male body (30) with respect to the female body (10);
- applying an intentional rotative force to the locking clip (50) in order to rotate the locking clip (50) from the open position (96a) to the locked position (96b);
- when in the locked position (96b), counteracting an unintentional rotative force directed towards the locking clip (50) by means of the snap-latch (59), such that the locking clip (50) is prevented from being rotated on the female body (10) from the locked position (96b) to the open position (96a); and
- readjusting the effective length of the conduits (102, 104) of the Bowden cable (100) by pulling the snap-latch (59) such that the locking clip (50) can be moved back from the locked position (96b) to the open position (96a) in order to allow an axial movement of the male body (30) with respect to the female body (10).

## Patentansprüche

1. Leitungslängenanpassungsvorrichtung (1), aufweisend:
a. einen weiblichen Körper (10);
b. einen männlichen Körper (30), der axial beweglich innerhalb des weiblichen Körpers (10) entlang einer Längsachse (L) der Leitungslängenanpassungsvorrichtung (1) angeordnet ist; und
c. einen Halteclip (50); wobei
d. in einer geöffneten Position der Halteclip (50) nicht mit dem männlichen Körper (30) in Eingriff steht, um die axiale Bewegung des männlichen Körpers (30) in Bezug auf den weiblichen Körper (10) zu ermöglichen; und
e. in einer verriegelten Position (96b) der Halteclip (50) mit dem männlichen Körper (30) in Eingriff steht, um die axiale Bewegung des männlichen Körpers (30) in Bezug auf den weiblichen Körper (10) zu verhindern;
**dadurch gekennzeichnet, dass**
f. der Halteclip (50) in einem Führungskanal (16) des weiblichen Körpers (10) befestigt ist; wobei
g. der Halteclip (50) drehbar auf der Oberfläche des weiblichen Körpers (10) angeordnet ist, so dass der Halteclip (50) innerhalb des Führungskanals (16) in Bezug auf den weiblichen Körper (10) um die Längsachse (L) von der geöffneten Position (96a) in die verriegelte Position (96b) verschiebbar (R) ist; und wobei
h. der Halteclip (50) eine Schnappverriegelung (59) mit einer Verriegelungslasche (58) umfasst, die in der verriegelten Position (96b) in eine Verriegelungsbuchse (18) eingreift, die an der Außenseite des weiblichen Körpers (10) angeordnet ist, um zu verhindern, dass sich der Halteclip (50) versehentlich aus der verriegelten Position (96b) in die geöffnete Position (96a) zurückdreht;
i. wobei die Schnappverriegelung (59) zum Lösen angehoben werden kann, so dass der Halteclip (50) wieder in ihre geöffnete Position (96a) zurückgedreht werden kann.

2. Leitungslängenanpassungsvorrichtung (1) nach Anspruch 1, wobei der männliche Körper (30) eine Reihe von ersten zahnförmigen Barrieren (36) auf mindestens einem Teil seiner Oberfläche aufweist und wobei der Halteclip (50) zweite zahnförmige Barrieren (56) aufweist, die mit den ersten zahnförmigen Barrieren (36) in Eingriff kommen, wenn der Halteclip (50) aus der geöffneten Position (96a) in die verriegelte Position (96b) gedreht wird.

3. Leitungslängenanpassungsvorrichtung (1) nach Anspruch 1, wobei der Halteclip (50) und der weibliche Körper (10) mindestens einen Sperrmechanismus (90) bilden, der verhindert, dass der Halteclip (50) versehentlich aus der geöffneten Position (96a) in die verriegelte Position (96b) gedreht wird.

4. Leitungslängenanpassungsvorrichtung (1) nach Anspruch 3, wobei der Sperrmechanismus (90) mindestens eine wellenförmige Kontur (91, 92, 94, 95) auf der Innenseite des Halteclips (50) umfasst, die mit mindestens einem Wellenkamm (93) auf der Außenseite des weiblichen Körpers (10) zusammenwirkt, um der Halteclip (50) in der geöffneten Position (96a) zu halten.

5. Leitungslängenanpassungsvorrichtung (1) nach Anspruch 4, wobei die mindestens eine wellenförmige Kontur (91, 92, 94, 95) einen ersten Wellenkamm (91) und einen zweiten Wellenkamm (94) umfasst, die sich an der Innenseite des Halteclips (50) befinden, die einen ersten und einen zweiten Wellental (92, 95) bildet, und wobei ein dritter Wellenkamm (93) auf der Oberfläche des weiblichen Körpers (10) angeordnet ist, so dass der dritte Wellenkamm (93) innerhalb des ersten Wellentals (92) angeordnet ist, wenn sich der Halteclip (50) in der geöffneten Position (96a) befindet.

6. Leitungslängenanpassungsvorrichtung (1) nach Anspruch 4 oder 5, wobei, wenn der Halteclip (50) in Richtung der verriegelten Position (96b) gedreht wird, der Wellenkamm (93) den Halteclip (50) verformt, indem er ihren Durchmesser lokal vergrößert.

7. Leitungslängenanpassungsvorrichtung (1) nach Anspruch 1, wobei die Leitungslängenanpassungsvorrichtung (1) ferner eine Feder (70) zum Vorspannen des weiblichen Körpers (10) und des männlichen Körpers (30) in axialer Richtung voneinander weg umfasst.

8. Leitungslängenanpassungsvorrichtung (1) nach Anspruch 2, wobei der weibliche Körper eine Barriereöffnung (24) aufweist und wobei der Halteclip eine Barrierebuchse (54) aufweist, die die zweiten zahnförmigen Barrieren (56) bereitstellt, und wobei die Barrierebuchse (54) innerhalb der Barriereöffnung (24) verschiebbar gelagert ist, um das Drehen des Halteclips (50) zu ermöglichen.

9. Leitungslängenanpassungsvorrichtung (1) nach Anspruch 8, wobei die Barriereöffnung (24) an ihrer Innenseite Halterahmen (27a, 27b) umfasst, die mit Halteverriegelungen (57a, 57b) an der Barrierebuchse (54) derart zusammenwirken, dass der Halteclip (50) nicht lösbar am weiblichen Körper (10) befestigt ist.

10. Leitungslängenanpassungsvorrichtung (1) nach Anspruch 1, wobei der weibliche Körper (10) und der männliche Körper (30) axiale Bohrungen (13, 33) zum Aufnehmen eines Innenkabels (106) eines Bowdenzugs (100) aufweisen, wobei die axialen Bohrungen (13, 33) zur Innenseite der Leitungslängenanpassungsvorrichtung (1) aufgeweitet sind.

11. Bowdenzug (100), aufweisend eine Leitungslängenanpassungsvorrichtung (1) nach einem der Ansprüche 1 bis 10, wobei der Bowdenzug (100) ferner aufweist:
a. eine erste Leitung (102), die mit dem weiblichen Körper (10) verbunden ist;
b. eine zweite Leitung (104), die mit dem männlichen Körper (30) verbunden ist;
c. ein inneres Kabel (106), das sich gleitend durch die Leitungen (102, 104) und durch die Leitungslängenanpassungsvorrichtung (1) erstreckt; wobei
d. das innere Kabel (106) Endstücke (108) umfasst; und
e. die Leitungen (102, 104) Leitungsendbefestigungsvorrichtungen (110) umfassen.

12. Verfahren zum Transportieren und Befestigen eines Bowdenzugs (100), wobei der Bowdenzug (100) eine Leitungslängenanpassungsvorrichtung (1), vorzugsweise eine Leitungslängenanpassungsvorrichtung (1) nach einem der Ansprüche 1 - 10, aufweist, wobei die Leitungslängenanpassungsvorrichtung (1) einen weiblichen Körper (10), einen männlichen Körper (30), der axial beweglich innerhalb des weiblichen Körpers (10) entlang einer Längsachse (L) der Leitungslängenanpassungsvorrichtung (1) angeordnet ist, und einen Halteclip (50) umfasst;
wobei in einer geöffneten Position der Halteclip (50) nicht mit dem männlichen Körper (30) in Eingriff steht, um die axiale Bewegung des männlichen Körpers (30) in Bezug auf den weiblichen Körper (10) zu ermöglichen; und
wobei in einer verriegelten Position (96b) der Halteclip (50) mit dem männlichen Körper (30) in Eingriff steht, um die axiale Bewegung des männlichen Körpers (30) in Bezug auf den weiblichen Körper (10) zu verhindern;
**dadurch gekennzeichnet, dass**
der Halteclip (50) in einem Führungskanal (16) des weiblichen Körpers (10) befestigt ist;
wobei der Halteclip (50) drehbar auf der Oberfläche des weiblichen Körpers (10) angeordnet ist, so dass der Halteclip (50) innerhalb des Führungskanals (16) in Bezug auf den weiblichen Körper (10) um die Längsachse (L) von der geöffneten Position (96a) in die verriegelte Position (96b) verschiebbar drehbar (R) ist;
wobei das Verfahren umfasst den Schritt von:
Gegenwirken einer unbeabsichtigten, auf der Halteclip (50) gerichteten Drehkraft mittels mindestens eines von dem Halteclip (50) und dem weiblichen Körper (10) gebildeten Sperrmechanismus (90), so dass verhindert wird, dass der Halteclip (50) an dem weiblichen Körper (10) aus der geöffneten Position (96a) in die verriegelte Position (96b) bewegt wird.

13. Verfahren zum Befestigen, Einstellen und Nachjustieren eines Bowdenzugs (100), wobei der Bowdenzug (100) eine Leitungslängenanpassungsvorrichtung (1), vorzugsweise eine Leitungslängenanpassungsvorrichtung (1) nach einem der Ansprüche 1 - 10, aufweist, wobei die Leitungslängenanpassungsvorrichtung (1) einen weiblichen Körper (10), einen männlichen Körper (30), der axial beweglich innerhalb des weiblichen Körpers (10) entlang einer Längsachse (L) der Leitungslängenanpassungsvorrichtung (1) angeordnet ist, und einen Halteclip (50) umfasst;
wobei in einer geöffneten Position der Halteclip (50) nicht mit dem männlichen Körper (30) in Eingriff steht, um die axiale Bewegung des männlichen Körpers (30) in Bezug auf den weiblichen Körper (10) zu ermöglichen; und
wobei in einer verriegelten Position (96b) der Halteclip (50) mit dem männlichen Körper (30) in Eingriff steht, um die axiale Bewegung des männlichen Körpers (30) in Bezug auf den weiblichen Körper (10) zu verhindern;
**dadurch gekennzeichnet, dass**
der Halteclip (50) in einem Führungskanal (16) des weiblichen Körpers (10) befestigt ist;
wobei der Halteclip (50) drehbar auf der Oberfläche des weiblichen Körpers (10) angeordnet ist, so dass der Halteclip (50) innerhalb des Führungskanals (16) in Bezug auf den männlichen Körper (10) um die Längsachse (L) von der geöffneten Position (96a) in die verriegelte Position (96b) verschiebbar drehbar (R) ist, wobei der Halteclip (50) eine Schnappverriegelung (59) aufweist, die eine Verriegelungslasche (58) aufweist, die in die verriegelte Position (96b) eingreift, eine Verriegelungsbuchse (18), die an der Außenseite des weiblichen Körpers (10) angeordnet ist, um zu verhindern, dass sich der Halteclip (50) versehentlich aus der verriegelten Position (96b) zurück in die geöffnete Position (96a) bewegt, wobei das Verfahren die folgenden Schritte umfasst:
- Einstellen der effektiven Länge von Leitungen (102, 104) des Bowdenzugs (100) durch axiales Bewegen des männlichen Körpers (30) in Bezug auf den weiblichen Körper (10);
- Anwenden einer absichtlichen Drehkraft auf der Halteclip (50), um der Halteclip (50) aus der geöffneten Position (96a) in die verriegelte Position (96b) zu drehen;
- Entgegenwirken, in der verriegelten Position (96b), einer unbeabsichtigten Drehkraft, die mittels der Schnappverriegelung (59) auf den Halteclip (50) gerichtet ist, so dass verhindert wird, dass der Halteclip (50) an dem weiblichen Körper (10) aus der verriegelten Position (96b) in die geöffnete Position (96a) gedreht wird; und
- Nachstellen der effektiven Länge der Leitungen (102, 104) des Bowdenzugs (100) durch Ziehen der Schnappverriegelung (59), so dass der Halteclip (50) aus der Verriegelungsposition (96b) in die geöffnete Position (96a) zurückbewegt werden kann, um eine axiale Bewegung des männlichen Körpers (30) in Bezug auf den weiblichen Körper (10) zu ermöglichen.

## Revendications

1. Un dispositif d'ajustement de la longueur d'une gaine (1), comprenant :
a. un corps femelle (10) ;
b. un corps mâle (30), agencé mobile axialement à l'intérieur du corps femelle (10) le long d'un axe longitudinal (L) du dispositif d'ajustement de la longueur de gaine (1) ; et
c. une agrafe de verrouillage (50) ; dans lequel
d. dans une position ouverte (96a) l'agrafe de verrouillage (50) n'est pas en prise avec le corps mâle (30) afin de permettre le déplacement axial du corps mâle (30) par rapport au corps femelle (10) ; et
e. dans une position verrouillée (96b) l'agrafe de verrouillage (50) vient en prise avec le corps mâle (30) afin d'empêcher le déplacement axial du corps mâle (30) par rapport au corps femelle (10) ; **caractérisé en ce que**
f. l'agrafe de verrouillage (50) est montée dans une gorge de guidage (16) du corps femelle (10) ; dans lequel
g. l'agrafe de verrouillage (50) est agencée à rotation sur la surface du corps femelle (10) de telle sorte que l'agrafe de verrouillage (50) soit mobile en rotation à coulissement (R) à l'intérieur de la gorge de guidage (16) par rapport au corps femelle (10) autour de l'axe longitudinal (L) depuis la position ouverte (96a) jusqu'à la position verrouillée (96b) ;
h. l'agrafe de verrouillage (50) comprend un verrou à encliquetage (59) muni d'une patte de verrouillage (58) qui vient en prise dans la position verrouillée (96b) avec une douille de verrouillage (18) agencée sur l'extérieur du corps femelle (10) pour empêcher un mouvement de verrouillage en arrière accidentel de l'agrafe de verrouillage (50) de la position verrouillée (96b) à la position ouverte (96a) ;
i. dans lequel le verrou à encliquetage (59) peut être soulevé pour le dégager de façon à pouvoir faire tourner l'agrafe de verrouillage (50) en retour à sa position ouverte (96a).

2. Le dispositif d'ajustement de la longueur d'une gaine (1) de la revendication 1, dans lequel le corps mâle (30) comprend une rangée de barrières en forme de dents (36) sur au moins une partie de sa surface et dans lequel l'agrafe de verrouillage (50) comprend des secondes barrières en forme de dents (56), qui viennent en prise avec les premières barrières en forme de dents (36) lorsque l'agrafe de verrouillage (50) est tournée de la position ouverte (96a) à la position verrouillée (96b).

3. Le dispositif d'ajustement de la longueur d'une gaine (1) de la revendication 1, dans lequel l'agrafe de verrouillage (50) et le corps femelle (10) forment au moins un mécanisme de blocage (90) qui empêche l'agrafe de verrouillage (50) d'être accidentellement tournée de la position ouverte (96a) à la position verrouillée (96b) .

4. Le dispositif d'ajustement de la longueur d'une gaine (1) de la revendication 3, dans lequel le mécanisme de blocage (90) comprend au moins un contour de forme ondulée (91, 92, 94, 95) sur le côté interne de l'agrafe de verrouillage (50) qui coopère avec au moins une crête ondulée (93) sur le côté externe du corps femelle (10) afin de maintenir l'agrafe de verrouillage (50) dans la position ouverte (96a).

5. Le dispositif d'ajustement de la longueur d'une gaine (1) de la revendication 4, dans lequel le au moins un contour de forme ondulée (91, 92, 94, 95) comprend une première crête ondulée (91) et une seconde crête ondulée (94) situées du côté interne de l'agrafe de verrouillage (50), formant une première et une seconde rigole ondulée (92, 95), et dans lequel une troisième crête ondulée (93) est située sur la surface du corps femelle (10), de sorte que la troisième crête ondulée (93) soit située à l'intérieur de la première rigole ondulée (92) lorsque l'agrafe de verrouillage (50) est dans la position ouverte (96a).

6. Le dispositif d'ajustement de la longueur d'une gaine (1) de la revendication 4 ou 5, dans lequel lorsque l'agrafe de verrouillage (50) est tournée en direction de la position verrouillée (96b), la crête ondulée (93) déforme l'agrafe de verrouillage (50) par augmentation locale de son diamètre.

7. Le dispositif d'ajustement de la longueur d'une gaine (1) de la revendication 1, dans lequel le dispositif d'ajustement de la longueur de gaine (1) comprend en outre un ressort (70) pour solliciter le corps femelle (10) et le corps mâle (30) en éloignement l'un de l'autre dans une direction axiale.

8. Le dispositif d'ajustement de la longueur d'une gaine (1) de la revendication 2, dans lequel le corps femelle comprend une ouverture de barrière (24) et dans lequel l'agrafe de verrouillage (50) comprend une douille de barrière (54) qui forme les secondes barrières en forme de dents (56) et dans lequel la douille de barrière (54) est supportée à coulissement à l'intérieur de l'ouverture de barrière (24) afin de permettre la rotation de l'agrafe de verrouillage (50).

9. Le dispositif d'ajustement de la longueur d'une gaine (1) de la revendication 8, dans lequel l'ouverture de barrière (24) comprend des cadres de maintien (27a, 27b) sur son côté interne qui interagissent avec des verrous de maintien (57a, 57b) au niveau de la douille de barrière (54) de sorte que l'agrafe de verrouillage (50) soit montée de manière non libérable sur le corps femelle (10) .

10. Le dispositif d'ajustement de la longueur d'une gaine (1) de la revendication 1, dans lequel le corps femelle (10) et le corps mâle (30) comprennent des orifices axiaux (13, 33) destinés à recevoir un câble interne (106) d'un câble Bowden (100), les orifices axiaux (13, 33) étant évasés vers l'intérieur du dispositif d'ajustement de la longueur de gaine (1).

11. Un câble Bowden (100) comprenant un dispositif d'ajustement de la longueur d'une gaine (1) de l'une des revendications 1 à 10, le câble Bowden (100) comprenant en outre :
a. une première gaine (102) reliée au corps femelle (10) ;
b. une seconde gaine (104) reliée au câble mâle (30) ;
c. un câble interne (106) s'étendant à coulissement au travers des gaines (102, 104) et au travers du dispositif d'ajustement de la longueur de gaine (1) ; dans lequel
d. le câble interne (106) comprend des raccords d'extrémité (108) ; et
e. les gaines (102, 104) comprennent des dispositifs de fixation d'extrémité de gaine (110).

12. Procédé de transport et de montage d'un câble Bowden (100), le câble Bowden (100) comprenant un dispositif d'ajustement de la longueur d'une gaine (1), de préférence un dispositif d'ajustement de la longueur d'une gaine (1) selon l'une des revendications 1 à 10, dans lequel le dispositif d'ajustement de la longueur de gaine (1) comprend un corps femelle (10), un corps mâle (30), agencé mobile axialement à l'intérieur du corps femelle (10) le long d'un axe longitudinal (L) du dispositif d'ajustement de la longueur de gaine (1), et une agrafe de verrouillage (50),
dans lequel dans une position ouverte (96a) l'agrafe de verrouillage (50) n'est pas en prise avec le corps mâle (30) afin de permettre le déplacement axial du corps mâle (30) par rapport au corps femelle (10) ; et
dans lequel dans une position verrouillée (96b) l'agrafe de verrouillage (50) vient en prise avec le corps mâle (30) afin d'empêcher le déplacement axial du corps mâle (30) par rapport au corps femelle (10) ; **caractérisé en ce que**
l'agrafe de verrouillage (50) est montée dans une gorge de guidage (16) du corps femelle (10) ; dans lequel l'agrafe de verrouillage (50) est agencée à rotation sur la surface du corps femelle (10) de telle sorte que l'agrafe de verrouillage (50) soit mobile en rotation à coulissement (R) à l'intérieur de la gorge de guidage (16) par rapport au corps femelle (10) autour de l'axe longitudinal (L) depuis la position ouverte (96a) jusqu'à la position verrouillée (96b) ;
dans lequel le procédé comprend l'étape de :
contrebalancement d'une force de rotation involontaire dirigée en direction de l'agrafe de verrouillage (50), au moyen d'au moins un mécanisme de blocage (90) formé par l'agrafe de verrouillage (50) et le corps femelle (10), de sorte que l'agrafe de verrouillage (50) soit empêchée d'être déplacée sur le corps femelle (10) de la position ouverte (96a) à la position fermée (96b).

13. Procédé de montage, d'ajustement et de réajustement d'un câble Bowden (100), le câble Bowden (100) comprenant un dispositif d'ajustement de la longueur d'une gaine (1), de préférence un dispositif d'ajustement de la longueur d'une gaine (1) selon l'une des revendications 1 à 10, dans lequel le dispositif d'ajustement de la longueur de gaine (1) comprend un corps femelle (10), un corps mâle (30), agencé mobile axialement à l'intérieur du corps femelle (10) le long d'un axe longitudinal (L) du dispositif d'ajustement de la longueur de gaine (1), et une agrafe de verrouillage (50),
dans lequel dans une position ouverte l'agrafe de verrouillage (50) n'est pas en prise avec le corps mâle (30) afin de permettre le déplacement axial du corps mâle (30) par rapport au corps femelle (10) ; et
dans lequel dans une position verrouillée (96b) l'agrafe de verrouillage (50) vient en prise avec le corps mâle (30) afin d'empêcher le déplacement axial du corps mâle (30) par rapport au corps femelle (10) ; **caractérisé en ce que**
l'agrafe de verrouillage (50) est montée dans une gorge de guidage (16) du corps femelle (10) ; dans lequel l'agrafe de verrouillage (50) est agencée à rotation sur la surface du corps femelle (10) de telle sorte que l'agrafe de verrouillage (50) soit mobile en rotation à coulissement (R) à l'intérieur de la gorge de guidage (16) par rapport au corps femelle (10) autour de l'axe longitudinal (L) depuis la position ouverte (96a) jusqu'à la position verrouillée (96b), l'agrafe de verrouillage (50) étant munie d'un verrou à encliquetage (59) comprenant une patte de verrouillage (58) qui vient en prise dans la position verrouillée (96b) avec une douille de verrouillage (18) agencée sur l'extérieur du corps femelle (10) pour empêcher un mouvement de verrouillage en arrière accidentel de l'agrafe de verrouillage (50) de la position verrouillée (96b) à la position ouverte (96a), dans lequel le procédé comprend les étapes suivantes :
- ajustement de la longueur effective des gaines (102, 104) du câble Bowden (100) par déplacement axial du câble mâle (30) par rapport au corps femelle (10) ;
- application d'une force de rotation intentionnelle à l'agrafe de verrouillage (50) afin de faire tourner l'agrafe de verrouillage (50) de la position ouverte (96a) à la position verrouillée (96b) ;
- pendant qu'elle se trouve dans la position verrouillée (96b), contrebalancement d'une force de rotation involontaire dirigée vers l'agrafe de verrouillage (50) au moyen d'un verrou à encliquetage (59), de sorte que l'agrafe de verrouillage (50) soit empêchée d'être tournée sur le corps femelle (10) de la position verrouillée (96b) à la position ouverte (96a) ; et
- réajustement de la longueur effective des gaines (102, 104) du câble Bowden (100) par tirage du verrou à encliquetage (59) de telle sorte que l'agrafe de verrouillage (50) puisse être déplacée autour de la position verrouillée (96b) à la position ouverte (96a) afin de permettre un déplacement axial du corps mâle (30) par rapport au corps femelle (10).
